# EUROPÄISCHE PATENTSCHRIFT

(11) **EP 1 192 687 B1**
(45) Veröffentlichungstag und Bekanntmachung des Hinweises auf die Patenterteilung: **16.03.2005**
(21) Anmeldenummer: 00948993.1
(22) Anmeldetag: 05.07.2000
(51) Int. Cl.: H01S 3/08, G02B 5/08

(54) **DISPERSIVER MEHRSCHICHTIGER SPIEGEL**
DISPERSIVE MULTI-LAYER MIRROR
MIROIR MULTICOUCHE DISPERSIF

(30) Priorität: 07.07.1999 AT 116099
(43) Veröffentlichungstag der Anmeldung: 03.04.2002
(73) Patentinhaber: Femtolasers Produktions GmbH, 2100 Korneuburg (AT)
(72) Erfinder: TEMPEA, Gabriel, Florin, A-1150 Wien (AT); KRAUSZ, Ferenc, A-2331 Vösendorf (AT)
(74) Vertreter: Weinzinger, Arnulf, Dipl.-Ing.
(86) Internationale Anmeldenummer: PCT/AT2000/000182
(87) Internationale Veröffentlichungsnummer: WO 2001/005000

(56) Entgegenhaltungen:
- WO-A-00/11501
- US-A- 5 912 915
- MATUSCHEK N ET AL: "Analytical design of double-chirped mirrors with custom-tailored dispersion characteristics" IEEE JOURNAL OF QUANTUM ELECTRONICS, FEB. 1999, IEEE, USA, Bd. 35, Nr. 2, Seiten 129-137, XP002149880 ISSN: 0018-9197
- TEMPEA G ET AL: "Dispersion control over 150 THz with chirped dielectric mirrors" IEEE JOURNAL OF SELECTED TOPICS IN QUANTUM ELECTRONICS, MARCH-APRIL 1998, IEEE, USA, Bd. 4, Nr. 2, Seiten 193-196, XP002149881 ISSN: 1077-260X
- SZIPOCS R ET AL: "CHIRPED MULTILAYER COATINGS FOR BROADBAND DISPERSION CONTROL IN FEMTOSECOND LASERS" OPTICS LETTERS,US,OPTICAL SOCIETY OF AMERICA, WASHINGTON, Bd. 19, Nr. 3, 1. Februar 1994 (1994-02-01), Seiten 201-203, XP000424364 ISSN: 0146-9592

## Beschreibung

Die Erfindung betrifft einen dispersiven, mehrschichtigen Spiegel, z.B. für Kurzpuls-Laservorrichtungen, Oszillatoren, Laserverstärker oder Hohlfaser-Kompressoren, welcher Spiegel eine auf einem Substrat angebrachte reflektierende Schicht sowie darauf angebrachte dielektrische Einzelschichten zur Erzeugung vorgegebener Dispersionswerte für verschiedene Frequenzkomponenten von zu reflektierenden Strahlungs-Kurzpulsen auf weist.

In der Lasertechnik werden zunehmend kürzere Laserimpulse, mit Impulsdauern im Pikosekunden- und Femtosekunden-Bereich, angestrebt. Abgesehen von der Anwendung in wissenschaftlichen Bereichen werden derartige Kurzpuls-Laservorrichtungen zunehmend in der Industrie für Materialbearbeitungen eingesetzt. Die bei solchen Kurzpuls-Laservorrichtungen eingesetzten Laserkristalle, vgl. beispielsweise WO 98/10494 A, haben ausgezeichnete thermische Eigenschaften sowie breite Fluoreszenzbänder, um die Erzeugung von Laserimpulsen mit Impulsdauern unter 10 oder sogar unter 5 Femtosekunden zu ermöglichen. Insbesondere werden hier Laserkristalle eingesetzt, die mit Übergangsmetallen dotiert sind, wie vor allem der Titan-Saphir(Ti: S) -Laserkristall.

Ein Problem bei der Erzeugung derartiger ultrakurzer Laserimpulse oder allgemein Strahlungsimpulse liegt in den übrigen optischen Komponenten des Lasersystems, wobei es insbesondere von Bedeutung wäre, breitbandige, hochreflektierende optische Elemente bzw. dispersive (d.h. eine Dispersionskomponente bewirkende) Komponenten zur Verfügung zu haben.

Es ist nun bereits vorgeschlagen worden, dispersive Komponenten für derartige Laservorrichtungen in Dünnschicht-Technik auszuführen, vgl. z.B. die US 5 734 503 A sowie A. Stingl et al., "Generation of 11-fs pulses from a Ti:sapphire laser without the use of prisms", Optics Letters, Vol. 19, Nr. 3, Februar 1994, S. 204-206. Dabei werden die Spiegel aus einer Vielzahl (z.B. 42) von Einzelschichten mit verschiedenen Brechungsindizes aufgebaut, die bei der Reflexion eines ultrakurzen Laserimpulses - der eine entsprechend große Bandbreite im Frequenzbereich aufweist - ihre Funktion ausüben: Die verschiedenen Wellenlängenkomponenten des Laserstrahls dringen unterschiedlich tief in die Einzelschichten des Spiegels ein, bevor sie reflektiert werden. Dadurch werden die verschiedenen Frequenzkomponenten verschieden lang, entsprechend der jeweiligen Schichttiefe, verzögert; die kurzwelligen Komponenten werden weiter außen reflektiert, die langwelligen Anteile hingegen tiefer im Spiegel. Dies bedeutet, dass die langwelligen Frequenzkomponenten gegenüber den kurzwelligen Komponenten zeitlich verzögert werden. Auf diese Weise kann bei einer Laservorrichtung eine Dispersionskompensation für einen Kurzpuls-Laserstrahl erhalten werden: Im Zeitbereich besonders kurze Impulse besitzen nämlich ein breites Frequenzspektrum, wobei aber die verschiedenen Frequenzkomponenten des Laserstrahls im zugehörigen Laserkristall - der optisch nicht-linear ist - einen unterschiedlichen Brechungsindex "sehen" (d.h. die optische Dicke des Laserkristalls ist für die verschiedenen Frequenzkomponenten der Laserimpulse verschieden groß) ; die verschiedenen Frequenzkomponenten des Laserimpulses werden daher beim Durchlaufen des Laserkristalls verschieden verzögert. Diesem Effekt kann durch die genannte Dispersionskompensation an den bekannten Dünnschicht-Laserspiegeln begegnet werden, die demgemäß als "dispersiv" bezeichnet werden. Diese bekannten Spiegel werden auch "gechirpte" Spiegel (Chirped Mirrors - CM) genannt und stellten einen wesentlichen Fortschritt im Vergleich zu davor eingesetzten Verzögerungselementen mit Prismen dar. Es konnten erstmals Laser-impulse mit Impulsdauern von 10 fs und darunter direkt von einem Laseroszillator erhalten werden, und die Lasersysteme wurden kompakter und verlässlicher. Die CM-Spiegel steuern die Wellenlängen-Abhängigkeit der Gruppenverzögerung wie erwähnt durch die Eindringtiefe der verschiedenen spektralen Komponenten in der Vielschichtstruktur. Eine derartige Vielschichtstruktur ist jedoch relativ aufwendig in der Herstellung und weist überdies relativ große Dickenabmessungen auf.

Ein "gechirpter" Spiegel ist auch aus dem Artikel N. Matuschek et al.: "Analytical Design of Double-Chirped Mirrors with Custom-Tailored Dispersion Characteristics", IEEE Journal of Quantum Electronics, Feb. 1999, USA, Band 35, Nr.2, S.129-137, bekannt; bei diesem bekannten Spiegel ist auf einem Halbleiter-Substrat eine Schichtstruktur mit vier Bereichen aufgebracht, wobei ein an das Substrat anschließender mehrschichtiger Viertelwellenlängen-Bereich als Bragg-Reflektor vorgesehen ist, über dem ein Einfach-Chirpbereich sowie ein Doppel-Chirpbereich und schließlich eine Antireflexionsbeschichtung angebracht sind.

In der nicht vorveröffentlichten früheren Anmeldung EP 1 105 753 A (= WO 00/11501 A), die einen Stand der Technik gemäß Art. 54(3) und (4) EPÜ hinsichtlich der Vertragsstaaten CH/LI, DE, FR, GB, IT bildet, ist ein dispersiver mehrschichtiger Spiegel beschrieben, bei dem auf einem Substrat eine hochreflektierende Metallschicht und darüber dielektrische Schichten angebracht sind, um für eine negative Gruppenverzögerungsdispersion zwei oder mehr Resonatoren zu bilden.

Aufgabe der Erfindung ist es nun, breitbandige dispersive Spiegel vorzusehen, die einen einfachen Schichtaufbau ermöglichen, wobei auch vergleichsweise kurze optische Weglängen erzielbar sein sollen, und wobei nichtsdestoweniger auch vergleichsweise große Dispersionswerte für die Gruppenverzögerung ermöglicht werden sollen.

Diese Aufgabe wird gemäß der Erfindung durch die in Anspruch 1 angegebenen Merkmale gelöst. Vorteilhafte Ausführungsformen und Weiterbildungen sind in den abhängigen Ansprüchen angegeben.

Beim vorliegenden Spiegel kann die Wellenlängen-Abhängigkeit der Impulsverzögerung oder Gruppenlaufzeit mit Hilfe der Speicherzeit der verschiedenen Spektralkomponenten im Spiegel gesteuert werden. Der vorliegende dispersive Spiegel ist ein resonanter Spiegel, wobei die gesamte optische Dicke für die Erzielung derselben gruppenweisen Dispersion und des gleichen Reflexionsvermögens im vergleichbaren Spektralbereich vergleichsweise kleiner sein kann als bei den bekannten CM-Spiegeln.

An sich ist es bereits seit langem bekannt, die Speicherzeit von optischen Impulsen in einer resonanten Struktur zu steuern, um so eine zeitliche Verzögerung bestimmter Dauer einzuführen. In der Vergangenheit wurden jedoch diese bekannten resonanten Strukturen nur mit schmalbandigen optischen Komponenten - sog. Gires-Tournois-Interferometer (GTI) - in Zusammenhang gebracht; im Gegensatz dazu haben zur Erfindung führende Untersuchungen gezeigt, dass problemlos Breitbandsysteme, beispielsweise für Wellenlängen im Bereich von 300 nm bei einer zentralen Wellenlänge von 800 nm, erzielt werden können, wenn erfindungsgemäß eine hochreflektierende Schicht, insbesondere eine hochreflektierende Metallschicht, beispielsweise mit Silber oder Aluminium, in Kombination mit einer dielektrischen, resonanten Beschichtungsstruktur, beispielsweise mit bloß 20 bis 30 dielektrischen Einzelschichten, kombiniert wird.

Ein GTI-Interferometer besteht aus einer hochreflektierenden Schicht, einer Zwischenschicht und einer teilreflektierenden Schicht, die eine (bei einer bestimmten Wellenlänge) resonante Kavität bilden. Im vorliegenden Fall des resonanten dispersiven Spiegels werden die Zwischenschicht und die obere teilreflektierende Schicht durch eine schwach resonante Mehrschichtstruktur ersetzt. Dadurch ist eine Kavität an sich nicht mehr zu erkennen.

Die dielektrische resonante Beschichtungsstruktur des vorliegenden Spiegels verstärkt geringfügig das Reflexionsvermögen der hochreflektierenden Schicht, sie hat aber den Hauptzweck, die Phase der reflektierten Impulse zu modulieren.

Wenn die Verluste im optischen System eher als kritisch angesehen werden, die Bandbreite jedoch weniger von Bedeutung ist, kann auch anstatt einer metallischen hochreflektierenden Schicht ein hochreflektierender dielektrischer Standard-Reflektor, wie insbesondere ein sog. Bragg-Reflektor (λ/4-Reflektor) eingesetzt werden. In diesem Fall wird die Bandbreite des Spiegels etwas - entsprechend der Bandbreite des Bragg-Reflektors - beschränkt.

Die technologischen Anforderungen an einen derartigen dispersiven resonanten Spiegel sind vergleichbar jenen bei den CM-Spiegeln. Zum Erzielen desselben Gruppenverzögerungs-Dispersionsvermögens und Reflexionsvermögens für denselben Spektralbereich kann jedoch eine vergleichsweise geringere optische Dicke angewandt werden. Für einen CM-Spiegel ist der Mindestwert der Beschichtungsdicke durch die optische Weglänge entsprechend der Gruppenlverzögerung gegeben, die zwischen der kürzesten und längsten Wellenlänge im hochreflektierenden Bereich eingeführt wird. Zufolge der resonanten Struktur sind die erfindungsgemäßen dispersiven Spiegel dieser Beschränkung jedoch nicht unterworfen, und es können höhere Dispersionswerte bei kürzeren optischen Dicken eingeführt werden. Ein weiterer Unterschied zu den CM-Spiegeln besteht darin, dass sich die durchschnittliche optische Schichtdicke nicht mit dem Abstand vom Trägersubstrat monoton ändert, sondern beim konstanten Mittelwert bleibt.

Insgesamt enthält der vorliegende Spiegel somit eine hoch reflektierende optische Interferenzbeschichtung, bei der ein hochreflektierender Reflektor monolithisch mit einer schwach resonanten dielektrischen Schichtstruktur integriert ist. Die Frequenzabhängigkeit der Gruppenverzögerung (Group Delay - GD) wird über die Speicherzeit für die verschiedenen Spektralkomponenten in der resonanten Struktur gesteuert.

Der erfindungsgemäße Spiegel eignet sich zur Dispersionskontrolle für breitbandige elektromagnetische Signale allgemein im Frequenzbereich von Mikrowellen bis zu Röntgenstrahlen, wobei insbesondere Anwendungen in Festkörperlasern, Laserverstärkern und Hohlfaserkompressoren bevorzugt sind, wo ultrakurze Impulse erzeugt werden, für die die vorliegende genaue und kompakte Dispersionssteuerung vorteilhaft ist. Die Herstellung ist dabei nicht nur wegen der geringeren Anzahl an Schichten, verglichen mit CM-Spiegeln, günstiger, sondern auch deshalb, weil die hochreflektierende Schicht an sich eine Standardschicht ist.

Die dielektrischen Einzelschichten können beispielsweise wie an sich bekannt Siliziumdioxid (SiO₂) bzw. Titandioxid (TiO₂) enthalten; die dielektrischen Einzelschichten können aber auch mit Tantalpentoxid (Ta₂O₅) aufgebaut sein. Insbesondere bei Verwendung einer metallischen hochreflektierenden Schicht können bei der Anbringung der darüberliegenden dielektrischen Schichten Haftprobleme auftreten, und es hat sich hier weiter als vorteilhaft erwiesen, wenn zwischen der hochreflektierenden Schicht und der dielektrischen resonanten Beschichtungsstruktur eine Haftvermittlungsschicht, z.B. aus Aluminiumoxid (Al₂O₃) vorgesehen ist.

Die Erfindung wird nachfolgend anhand von Beispielen unter Bezugnahme auf die Zeichnung noch weiter erläutert. In der Zeichnung zeigen im Einzelnen:
Fig.1 schematisch den Aufbau eines dispersiven resonanten Spiegels mit einer hochreflektierenden Metallschicht;
Fig.2 ein zugehöriges Diagramm des Reflexionsvermögens R (%) bzw. der Gruppenverzögerungs-Dispersion GDD (fs²) über der Wellenlänge λ;
Fig.3 einen Aufbau eines anderen dispersiven resonanten Spiegels, mit einem hochreflektierenden Bragg(λ/4)-Reflektor; und
Fig.4 ein entsprechendes zugehöriges Diagramm von Reflexionsvermögen R (%) und Dispersion GDD (fs²) über der Wellenlänge λ.

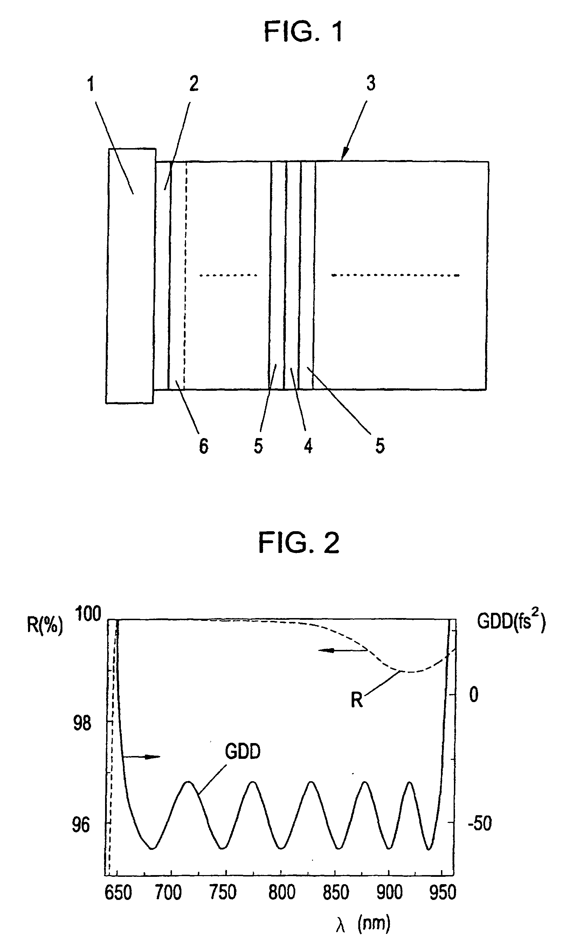

Der in Fig.1 schematisch veranschaulichte resonante dispersive Spiegel weist auf einem Substrat 1 eine hochreflektierende Metallschicht 2 auf, über der eine resonante dielektrische Mehrschicht-Beschichtungsstruktur 3 mit einigen, z.B. 20 bis 30, Einzelschichten 4, 5 angebracht ist. Diese dielektrischen Einzelschichten 4, 5 sind abwechselnd hochbrechende und niedrigbrechende Schichten unterschiedlicher Dicke, und sie können in an sich bekannter Weise abwechselnd aus Titanoxid (TiO₂) bzw. Siliziumoxid (SiO₂) bestehen.

Für die hochreflektierende Metallschicht 2 kann beispielsweise Silber oder aber Aluminium verwendet werden. Weiters kann zur besseren Haftung der dielektrischen Einzelschichten 4, 5 an der Metallschicht 2 eine Haftvermittlungsschicht 6 vorgesehen sein, die beispielsweise aus Aluminiumoxid (Al₂O₃) bestehen kann.

Für den Aufbau des in Fig.1 schematisch veranschaulichten resonanten dispersiven Spiegels kann beispielsweise folgende Schichtenfolge, mit den entsprechenden Schichtdicken (in nm) angeführt werden:

| | |
|---|---|
| Ag | 300,00 |
| Al₂O₃ | 112,36 |
| TiO₂ | 91,66 |
| SiO₂ | 139,61 |
| TiO₂ | 87,46 |
| SiO₂ | 129,80 |
| TiO₂ | 55,59 |
| SiO₂ | 93,11 |
| TiO₂ | 86,20 |
| SiO₂ | 141,73 |
| TiO₂ | 86,37 |
| SiO₂ | 148,84 |
| TiO₂ | 52,21 |
| SiO₂ | 55,53 |
| TiO₂ | 85,60 |
| SiO₂ | 158,43 |
| TiO₂ | 91,84 |
| SiO₂ | 83,49 |
| TiO₂ | 30,00 |
| SiO₂ | 120,28 |
| TiO₂ | 98,41 |
| SiO₂ | 156,27 |
| TiO₂ | 21,04 |
| SiO₂ | 67,20 |
| TiO₂ | 97,16 |
| SiO₂ | 164,70 |
| TiO₂ | 20,18 |
| SiO₂ | 60,92 |
| TiO₂ | 94,78 |
| SiO₂ | 139,05 |

Ein derartiger resonanter dispersiver Spiegel ergibt beispielsweise bei Wellenlängen λ von ca. 650 nm bis ca. 950 nm, ein Verhalten hinsichtlich Reflexionsvermögen R (in %) und Dispersion (GDD-Group Delay Dispersion-Gruppenverzögerungs-Dispersion, in fs²; die GDD ist die erste Ableitung der Gruppenverzögerung GD), wie in Fig.2 dargestellt ist.

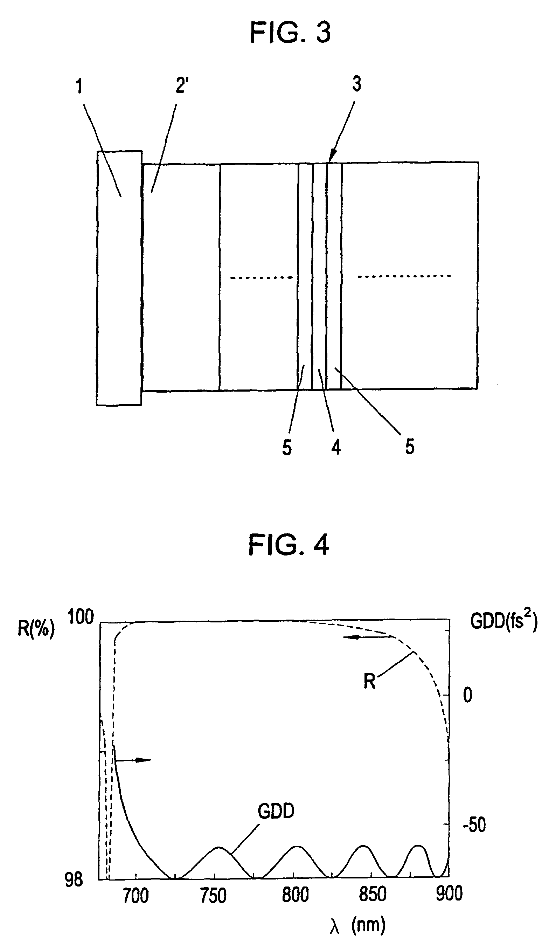

In Fig.3 ist eine alternative Ausführungsform des vorliegenden resonanten dispersiven Spiegels dargestellt, wobei nunmehr am Substrat 1 als hochreflektierende Spiegelschicht ein Bragg(λ/4)-Reflektor 2' angebracht ist. Darauf folgt wieder eine resonante dielektrische Beschichtungsstruktur 3 mit abwechselnden hochbrechenden bzw. niedrigbrechenden Einzelschichten 4 bzw. 5.

Ein derartiger Spiegelaufbau, wie in Fig.3 veranschaulicht, ist dann von Vorteil, wenn das zugehörige optische System hinsichtlich der Verluste kritischer ist, hingegen kleinere Bandbreiten akzeptiert werden können.

Das typische Verhalten hinsichtlich Reflexionsvermögen R und Dispersion GDD ergibt sich beispielsweise aus dem Diagramm von Fig.4, wobei ersichtlich ist, dass die Bandbreite nunmehr geringer ist, beispielsweise von ca. 700 nm Wellenlänge λ bis ca. 900 nm Wellenlänge λ (anstatt 650 nm bis 950 nm gemäß Fig.2).

Für die Einzelschichten 4 bzw. 5 können wiederum Titanoxid(TiO₂)- und Siliziumoxid(SiO₂)-Schichten vorgesehen werden. Selbstverständlich können auch mehr oder weniger als die angegebenen 28 Einzelschichten 4, 5, je nach Bedarf, eingesetzt werden. Insbesondere können auch weniger, beispielsweise nur ca. 20, Einzelschichten 4, 5 verwendet werden. Darüber hinaus sind auch andere Materialien, wie Tantalpentoxid (Ta₂O₅) usw., denkbar. Wesentlich ist, dass diese Einzelschichten 4, 5 insgesamt eine resonante Mehrschichtstruktur ergeben und dabei die Phasen der reflektierten Impulse modulieren.

## Patentansprüche (Patentansprüche für folgende(n) Vertragsstaat(en): AT, BE, CY, DK, ES, FI, GR, IE, LU, MC, NL, PT, SE)

1. Dispersiver, mehrschichtiger Spiegel, z.B. für Kurzpuls-Laservorrichtungen, Oszillatoren, Laserverstärker oder Hohlfaser-Kompressoren, welcher Spiegel eine auf einem Substrat (1) angebrachte reflektierende Schicht sowie mehrere darauf angebrachte dielektrische Einzelschichten (4, 5) zur Erzeugung vorgegebener Dispersionswerte für verschiedene Frequenzkomponenten von zu reflektierenden Strahlungs-Kurzpulsen aufweist, wobei die reflektierende Schicht auf dem Substrat (1) eine hochreflektierende Schicht (2 ; 2') zur Reflexion aller Frequenzkomponenten ist, über der die dielektrischen Einzelschichten (4, 5) als resonante Beschichtungsstruktur (3) zur Modulation der Phasen der reflektierten Kurzpulse angebracht sind, wobei unterschiedliche Speicherzeiten für die verschiedenen Frequenzkomponenten in der resonanten Beschichtungsstruktur (3)gegeben sind.

2. Spiegel nach Anspruch 1, **dadurch gekennzeichnet, dass** die hochreflektierende Schicht (2) eine Metallschicht ist.

3. Spiegel nach Anspruch 2, **dadurch gekennzeichnet, dass** die hochreflektierende Metallschicht (2) mit Silber aufgebaut ist.

4. Spiegel nach Anspruch 2, **dadurch gekennzeichnet, dass** die hochreflektierende Metallschicht (2) mit Aluminium aufgebaut ist.

5. Spiegel nach Anspruch 1, **dadurch gekennzeichnet, dass** die hochreflektierende Schicht (2 ' ) als an sich bekannter Bragg-Reflektor ausgebildet ist.

6. Spiegel nach einem der Ansprüche 1 bis 5, **dadurch gekennzeichnet, dass** die resonante Beschichtungsstruktur (3) nur einige, z.B. 20 bis 30, dielektrische Einzelschichten (4, 5) enthält.

7. Spiegel nach einem der Ansprüche 1 bis 6, **dadurch gekennzeichnet, dass** die dielektrischen Einzelschichten (4, 5) abwechselnd hoch- und niedrigbrechend sind.

8. Spiegel nach einem der Ansprüche 1 bis 7, **dadurch gekennzeichnet, dass** die dielektrischen Einzelschichten (4, 5) abwechselnd aus Siliziumdioxid (SiO₂) bzw. Titandioxid (TiO₂) bestehen.

9. Spiegel nach einem der Ansprüche 1 bis 8, **dadurch gekennzeichnet, dass** zwischen der hochreflektierenden Schicht (2) und der dielektrischen resonanten Beschichtungsstruktur (3) eine Haftvermittlungsschicht (6), z.B. aus Aluminiumoxid (Al₂O₃) vorgesehen ist.

## Patentansprüche (Patentansprüche für folgende(n) Vertragsstaat(en): CH, LI, DE, FR, GB, IT)

1. Dispersiver, mehrschichtiger Spiegel, z.B. für Kurzpuls-Laservorrichtungen, Oszillatoren, Laserverstärker oder Hohlfaser-Kompressoren, welcher Spiegel mehrere auf einem Substrat (1) angebrachte dielektrische Einzelschichten (4, 5) zur Erzeugung vorgegebener Dispersionswerte, mit Ausnahme von negativen Dispersionswerten, für verschiedene Frequenzkomponenten von zu reflektierenden Strahlungs-Kurzpulsen aufweist, wobei auf dem Substrat (1) eine hochreflektierende Schicht (2; 2') zur Reflexion aller Frequenzkomponenten vorgesehen ist, über der dielektrischen Einzelschichten (4, 5) als resonante Beschichtungsstruktur (3) zur Modulation der Phasen der reflektierten Kurzpulse angebracht sind, und wobei unterschiedliche Speicherzeiten für die verschiedenen Frequenzkomponenten in der resonanten Beschichtungsstruktur (3) gegeben sind.

2. Spiegel nach Anspruch 1, **dadurch gekennzeichnet, dass** die hochreflektierende Schicht (2) eine Metallschicht ist.

3. Spiegel nach Anspruch 2, **dadurch gekennzeichnet, dass** die hochreflektierende Metallschicht (2) mit Silber aufgebaut ist.

4. Spiegel nach Anspruch 2, **dadurch gekennzeichnet, dass** die hochreflektierende Metallschicht (2) mit Aluminium aufgebaut ist.

5. Spiegel nach Anspruch 1, **dadurch gekennzeichnet, dass** die hochreflektierende Schicht (2') als Bragg-Reflektor ausgebildet ist.

6. Spiegel nach einem der Ansprüche 1 bis 5, **dadurch gekennzeichnet, dass** nur ca. 20 bis 30 dielektrische Einzelschichten (4, 5) vorgesehen sind.

7. Spiegel nach einem der Ansprüche 1 bis 6, **dadurch gekennzeichnet, dass** die dielektrischen Einzelschichten (4, 5) abwechselnd hoch- und niedrigbrechend sind.

8. Spiegel nach einem der Ansprüche 1 bis 7, **dadurch gekennzeichnet, dass** die dielektrischen Einzelschichten (4, 5) abwechselnd aus Siliziumdioxid (SiO₂) bzw. Titandioxid (TiO₂) bestehen.

9. Spiegel nach einem der Ansprüche 1 bis 8, **dadurch gekennzeichnet, dass** zwischen der hochreflektierenden Schicht (2) und den dielektrischen Einzelschichten (4,5) eine Haftvermittlungsschicht (6), z.B. aus Aluminiumoxid (Al₂O₃) vorgesehen ist.

## Claims (Claims for the following Contracting State(s): AT, BE, CY, DK, ES, FI, GR, IE, LU, MC, NL, PT, SE)

1. A dispersive multilayer mirror, e.g. for short-pulse laser arrangements, oscillators, laser amplifiers or hollow fiber compressors, said mirror comprising a reflecting layer applied onto a substrate (1) as well as several individual dielectric layers (4, 5) applied thereon so as to produce given dispersion values for different frequency components of radiation short pulses to be reflected, wherein the reflecting layer on the substrate (1) is a highly-reflecting layer (2; 2') for reflecting all the frequency components, with the individual dielectric layers (4, 5) being applied thereabove as a resonant coating structure (3) for modulating the phases of the reflected short pulses, different storage times being given for the different frequency components in the resonant coating structure (3).

2. A mirror according to claim 1, **characterised in that** the highly-reflecting layer (2) is a metal layer.

3. A mirror according to claim 2, **characterised in that** the highly reflecting metal layer (2) comprises silver.

4. A mirror according to claim 2, **characterised in that** the highly reflecting metal layer (2) comprises aluminum.

5. A mirror according to claim 1, **characterised in that** the highly reflecting layer (2') is designed as a Bragg reflector known per se.

6. A mirror according to any one of claims 1 to 5, **characterised in that** the resonant coating structure (3) comprises merely a few, e.g. 20 to 30, individual dielectric layers (4, 5).

7. A mirror according to any one of claims 1 to 6, **characterised in that** the individual dielectric layers (4, 5) are alternately high-refracting and low-refracting.

8. A mirror according to any one of claims 1 to 7, **characterised in that** the individual dielectric layers (4, 5) alternately consist of silicon dioxide (SiO₂), and titanium dioxide (TiO₂), respectively.

9. A mirror according to any one of claims 1 to 8, **characterised in that** an adhesion-promoting layer (6), e.g. of aluminum oxide (Al₂O₃) is provided between the high-reflecting layer (2) and the dielectric resonant coating structure (3).

## Claims (Claims for the following Contracting State(s): CH, LI, DE, FR, GB, IT)

1. A dispersive multilayer mirror, e.g. for short-pulse laser arrangements, oscillators, laser amplifiers or hollow fiber compressors, said mirror comprising several individual dielectric layers (4, 5) applied onto a substrate (1) so as to produce given dispersion values, with the exception of negative dispersion values, for different frequency components of radiation short pulses to be reflected, wherein a highly-reflecting layer (2; 2') is provided on the substrate (1) for reflecting all the frequency components, with the individual dielectric layers (4, 5) being applied thereabove as a resonant coating structure (3) for modulating the phases of the reflected short pulses, and wherein different storage times are given for the different frequency components in the resonant coating structure (3).

2. A mirror according to claim 1, **characterised in that** the highly-reflecting layer (2) is a metal layer.

3. A mirror according to claim 2, **characterised in that** the highly reflecting metal layer (2) comprises silver.

4. A mirror according to claim 2, **characterised in that** the highly reflecting metal layer (2) comprises aluminium.

5. A mirror according to claim 1, **characterised in that** the highly reflecting layer (2') is designed as a Bragg reflector.

6. A mirror according to any one of claims 1 to 5, **characterised in that** merely approximately 20 to 30 individual dielectric layers (4, 5) are provided.

7. A mirror according to any one of claims 1 to 6, **characterised in that** the individual dielectric layers (4, 5) are alternately high-refracting and low-refracting.

8. A mirror according to any one of claims 1 to 7, **characterised in that** the individual dielectric layers (4, 5) alternately consist of silicon dioxide (SiO₂), and titanium dioxide (TiO₂), respectively.

9. A mirror according to any one of claims 1 to 8, **characterised in that** an adhesion-promoting layer (6), e.g. of aluminum oxide (Al₂O₃) is provided between the high-reflecting layer (2) and the individual dielectric layers (4, 5).

## Revendications (Revendications pour l'(les) Etat(s) contractant(s) suivant(s): AT, BE, CZ, DK, ES, FI, GR, IE, LU, MC, NL, PT, SE)

1. Miroir dispersif multicouche, par exemple pour des dispositifs laser à brèves impulsions, des oscillateurs, des amplificateurs laser et des compresseurs à fibres creuses, lequel miroir comprend une couche réfléchissante disposée sur un substrat (1) ainsi que plusieurs couches diélectriques individuelles (4, 5) disposées sur un substrat (1) pour produire des valeurs de dispersion prédéterminées, pour différentes composantes de fréquences de brèves impulsions de rayonnement devant être réfléchies, et dans lequel la couche réfléchissante est une couche hautement réfléchissante (2; 2') servant à réfléchir toutes les composantes de fréquences et au-dessus de laquelle sont disposées des couches diélectriques individuelles (4, 5) servant à former une structure de revêtement résonante (3) pour moduler les phases des brèves impulsions réfléchies, et dans lequel des différents temps de mémorisation sont fixés pour les différentes composantes de fréquences dans la structure de revêtement résonante (3).

2. Miroir selon la revendication 1, **caractérisé en ce que** la couche hautement réfléchissante (2) est une couche métallique.

3. Miroir selon la revendication 2, **caractérisé en ce que** la couche hautement réfléchissante (2) est constituée d'argent.

4. Miroir selon la revendication 2, **caractérisé en ce que** la couche hautement réfléchissante (2) est constituée d'aluminium.

5. Miroir selon la revendication 1, **caractérisé en ce que** la couche hautement réfléchissante (2) est réalisée sous la forme d'un réflecteur de Bragg.

6. Miroir selon l'une des revendications 1 à 5, **caractérisé en ce que** seules environ 20 à 30 couches diélectriques individuelles (4, 5) sont prévues.

7. Miroir selon l'une des revendications 1 à 6, **caractérisé en ce que** les couches diélectriques individuelles (4, 5) sont alternativement hautement réfringentes et faiblement réfringentes.

8. Miroir selon l'une des revendications 1 à 7, **caractérisé en ce que** les couches diélectriques individuelles (4, 5) sont formées alternativement de dioxyde de silicium (SiO₂) et de dioxyde de titane (TiO₂).

9. Miroir selon l'une des revendications 1 à 8, **caractérisé en ce qu'**entre la couche hautement réfléchissante (2) et les couches diélectriques individuelles (4, 5) est prévue une couche de couplage (6), formée par exemple d'oxyde d'aluminium (Al₂O₃).

## Revendications (Revendications pour l'(les) Etat(s) contractant(s) suivant(s): CH, LI, DE, FR, GB, IT)

1. Miroir dispersif multicouche, par exemple pour des dispositifs laser à brèves impulsions, des oscillateurs, des amplificateurs laser et des compresseurs à fibres creuses, lequel miroir comprend plusieurs couches diélectriques individuelles (4, 5) disposées sur un substrat (1) pour produire des valeurs de dispersion prédéterminées, à l'exception de valeurs de dispersion négatives, pour différentes composantes de fréquences de brèves impulsions de rayonnement devant être réfléchies, et dans lequel sur le substrat (1) est prévue une couche hautement réfléchissante (2; 2') servant à réfléchir toutes les composantes de fréquences et au-dessus de laquelle sont disposées des couches diélectriques individuelles (4, 5) servant à former une structure de revêtement résonante (3) pour moduler les phases des brèves impulsions réfléchies, et dans lequel des différents temps de mémorisation sont fixés pour les différentes composantes de fréquences dans la structure de revêtement résonante (3).

2. Miroir selon la revendication 1, **caractérisé en ce que** la couche hautement réfléchissante (2) est une couche métallique.

3. Miroir selon la revendication 2, **caractérisé en ce que** la couche hautement réfléchissante (2) est constituée d'argent.

4. Miroir selon la revendication 2, **caractérisé en ce que** la couche hautement réfléchissante (2) est constituée d'aluminium.

5. Miroir selon la revendication 1, **caractérisé en ce que** la couche hautement réfléchissante (2) est réalisée sous la forme d'un réflecteur de Bragg.

6. Miroir selon l'une des revendications 1 à 5, **caractérisé en ce que** seules environ 20 à 30 couches diélectriques individuelles (4, 5) sont prévues.

7. Miroir selon l'une des revendications 1 à 6, **caractérisé en ce que** les couches diélectriques individuelles (4, 5) sont alternativement hautement réfringentes et faiblement réfringentes.

8. Miroir selon l'une des revendications 1 à 7, **caractérisé en ce que** les couches diélectriques individuelles (4, 5) sont formées alternativement de dioxyde de silicium (SiO₂) et de dioxyde de titane (TiO₂).

9. Miroir selon l'une des revendications 1 à 8, **caractérisé en ce qu'**entre la couche hautement réfléchissante (2) et les couches diélectriques individuelles (4, 5) est prévue une couche de couplage (6), formée par exemple d'oxyde d'aluminium (Al₂O₃).
